# EUROPEAN PATENT SPECIFICATION

(11) **EP 3 305 628 B1**
(45) Date of publication and mention of the grant of the patent: **30.12.2020**
(21) Application number: 15893949.6
(22) Date of filing: 05.11.2015
(51) Int. Cl.: B62D 21/15, B62D 25/10, B62D 25/08, B62D 21/11, B62D 21/02, B60R 19/34

(54) **AUTOMOBILE ENGINE COMPARTMENT ASSEMBLY**
MOTORRAUMANORDNUNG FÜR KRAFTFAHRZEUG
ENSEMBLE COMPARTIMENT MOTEUR D'AUTOMOBILE

(30) Priority: 29.05.2015 CN 201510290031
(43) Date of publication of application: 11.04.2018
(73) Proprietor: Guangzhou Automobile Group Co., Ltd, Guangzhou, Guangdong 510030 (CN)
(72) Inventor: HUANG, Xiangdong, Guangzhou Guangdong 510030 (CN); YUE, Peng, Guangzhou Guangdong 510030 (CN); YUAN, Huanquan, Guangzhou Guangdong 510030 (CN); GENG, Furong, Guangzhou Guangdong 510030 (CN); CHEN, Jinhua, Guangzhou Guangdong 510030 (CN)
(74) Representative: Haseltine Lake Kempner LLP
(86) International application number: PCT/CN2015/093899
(87) International publication number: WO 2016/192304

(56) References cited:
- EP-A1- 1 849 685
- WO-A1-2014/097513
- WO-A1-2014/162574
- CN-U- 202 863 556
- CN-U- 203 306 103
- CN-U- 204 775 483
- DE-A1- 4 417 380
- US-A1- 2011 304 174

## Description

### CROSS REFERENCE TO RELATED APPLICATION

### FIELD OF THE INVENTION

The present invention relates to the field of vehicle body structure, and more particularly to a vehicle engine compartment assembly.

### BACKGROUND OF THE INVENTION

In the field of vehicle, the structural design of engine compartments of vehicle is very important to safety performance of collision. The vehicle engine compartment must be stable and capable of absorbing energy efficiently, when it is collided from different angles or with different overlapping rates. The results of IIHS (Insurance Institute for Highway Safety) small overlap crashtests in recent two years show that, most of cars have poor performance in collision when they are collided from different angles or with different overlapping rates. With the rise of competition, vehicle parts are expected to be interchangeable between different vehicle models. However, for the same engine compartment structure, when it is used in different vehicle models, particularly in vehicle models with different size and weight, there will be a big difference with respect to the collision performance. Therefore, on the premise of maintaining the universality of vehicle parts for engine compartment, how to ensure the collision performance of vehicle, even in IIHS small overlap crashtests, is a large challenge in vehicle structural design.

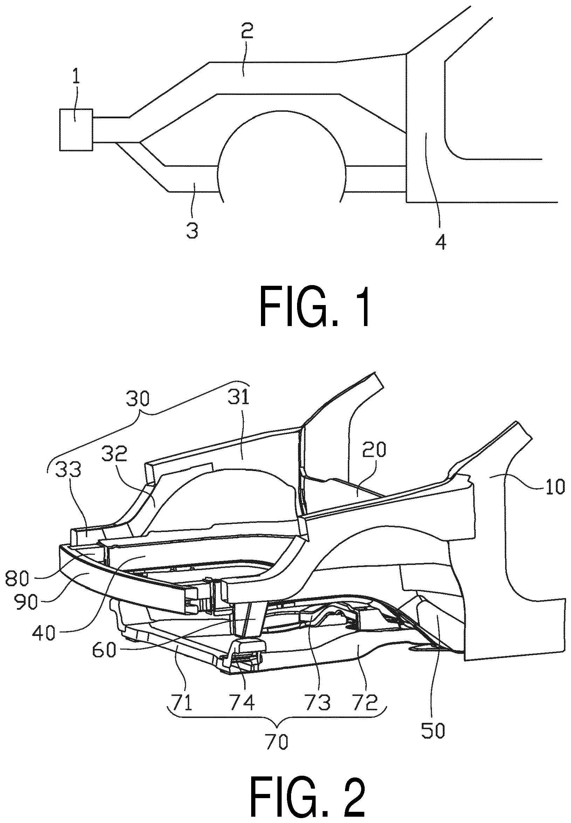

FIG. 1 is a schematic view showing a traditional engine compartment. As shown in FIG. 1, the engine compartment includes a front bumper 1, an upper longitudinal beam 2, a front subframe 3 and an A-pillar 4. The front bumper 1, the upper longitudinal beam 2 and the front subframe 3 cooperatively form a " 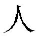 " shaped structure. Rear portions of the upper longitudinal beam 2 and the front subframe 3 are connected to upper and lower portions of the A-pillar 4 to form a " 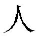 " shaped structure. The engine compartment has an arc-shaped front longitudinal beam structure connected in large overlapping area with a passenger compartment, which can deform to absorb energy and has stable crumple modes and excellent crashworthiness when subject to head-on collision. However, the engine compartment has disadvantages listed hereinafter.
1. Insufficiency in absorbing energy. The engine compartment has only two load transfer paths, with one load transfer path from the front bumper to the upper longitudinal beam and then to the A-pillar, and the other load transfer path from the front bumper to the front subframe and then to the A-pillar. Thus, the energy absorption requirement for each load transfer path is high, and the structural parts in each load transfer path generally adopts large cross-section or large thickness to meet the energy absorption requirement.
2. Bad performance in crashworthiness collided from different angles. Because the engine compartment has only two load transfer paths, in a side view of the vehicle (i.e., seen from a direction of the width of the vehicle), a distance between the upper longitudinal beam and the subframe cannot be too large to ensure a rigidity and a stability of the engine compartment.

WO 2014/097513 A1 discloses a vehicle body structure. The vehicle body structure has a left-right pair of front side frames 6, a left-right pair of front damper housings 20, a front frame structure 40 joined to the intermediate portion in the front-back direction of the left-right pair of front side frames to the front of the front damper housings.

WO 2014/162574 A1 discloses a vehicle body end portion structure. The vehicle body end portion 10 is provided with : a front side member 12 including an inner box 14A disposed at an end portion thereof in the vehicle front-rear direction, a lower side member 40 including a lower crush box 34 disposed at an end portion thereof in the vehicle front-rear direction on a lower side with respect to the inner box 14A, and a link plate 44 linking the inner box 14A side section of the front side member 12 and the lower crush box 34 side section of the lower side member 40. A apron upper member 26 of the vehicle body end portion 10 has an outer extension 30.

EP 1849685 A1 discloses a vehicle front body structure 10. The vehicle front body structure 10 comprises a main frame 11 and a sub-frame 12. The main frame 11 includes left and right front side frames 21 and 22, and left and right upper members 25 and 32. Left and right horizontal connecting portions or members 26 and 34 connect respective front end portions 25a and 32a of the left and right upper members 25, 35 and the front end portions 21a, 22a of the left and right front side frames 21, 22.

### SUMMARY OF THE INVENTION

In view of above, the present invention provides a vehicle engine compartment assembly which has an excellent performance in absorbing energy.

Further, the present invention provides a vehicle engine compartment assembly which can confront collisions from different situations.

The vehicle engine compartment assembly of the present invention includes two upper longitudinal beams and a front subframe disposed under the upper longitudinal beams. The vehicle engine compartment assembly further includes two middle longitudinal beams and two connecting supporting members. Each middle longitudinal beam is disposed between one of the upper longitudinal beams and the front subframe. Each connecting supporting member is connected to one of the middle longitudinal beams, one of the upper longitudinal beams and the front subframe; the vehicle engine compartment assembly further comprises two energy absorbing boxes and a bumper beam, the energy absorbing boxes are disposed in the front of the upper longitudinal beam and the bumper beam is disposed in the front of the energy absorbing boxes, it is characterized in that a front portion of the upper longitudinal beams protrude out beyond the middle longitudinal beams along a longitudinal direction of the vehicle, the front portion of the upper longitudinal beams protruding out the middle longitudinal beams and an energy absorbing boxes of the vehicle are located side by side.

According to an embodiment of the present invention, as seen from a side view of the vehicle, an end of the upper longitudinal beam crosses with the connecting supporting member and the middle longitudinal beam, a gap is defined between the other end of the upper longitudinal beam and the middle longitudinal beam, an end of the longitudinal bar is adjacent to the connecting supporting member and the middle longitudinal beam, a gap is defined between the other end of the longitudinal bar and the middle longitudinal beam, the other end of the longitudinal bar and the other end of the upper longitudinal beam are at opposites of the middle longitudinal beam.

According to an embodiment of the present invention, the front subframe comprises a front crossbar, two longitudinal bars and a rear crossbar, two ends of the front crossbar are connected to the two longitudinal bars respectively, two ends of the rear crossbar are connected to the two longitudinal bars respectively, each end of the front crossbar is adjacent to one of the energy absorbing boxes;
seen from a top view of the vehicle, the upper longitudinal beams are disposed at two opposite outer sides of the middle longitudinal beams respectively along a lateral direction of the vehicle, two opposite sides of each connecting supporting member are connected to one upper longitudinal beam and one middle longitudinal beam, a gap is defined between one upper longitudinal beam and one middle longitudinal beam..

According to an embodiment of the present invention, the upper longitudinal beam includes a first portion, a second portion and a third portion, the first portion is connected to an A-pillar of the vehicle, the third portion is connected to an energy absorbing box of the vehicle, a height of the third portion is lower than a height of the first portion, the second portion is connected between the first portion and the third portion, and the connecting supporting member is connected to the third portion of the upper longitudinal beam.

According to an embodiment of the present invention, the first portion of the upper longitudinal beam is shaped like an inclined line from a side view of the vehicle, the second portion of the upper longitudinal beam is arc-shaped from a side view of the vehicle, and the third portion of the upper longitudinal beam is a horizontal line from a side view of the vehicle.

According to an embodiment of the present invention, the connecting supporting member includes a first connecting portion connected to the upper longitudinal beam, a second connecting portion connected to the middle longitudinal beam, and a third connecting portion connected to the front subframe, the first connecting portion is perpendicular to the second connecting portion, and the first connecting portion is parallel to the third connecting portion.

According to an embodiment of the present invention, the front subframe further includes a connecting bracket, the connecting bracket is located above a connecting position between the front crossbar and the longitudinal bar, and the front subframe is threadedly connected to the connecting supporting member via the connecting bracket.

In the vehicle engine compartment assembly of the present invention, the middle longitudinal beam is added between the upper longitudinal beam and the front subframe, and the upper longitudinal beam, the middle longitudinal beam and the front subframe are connected via the connecting supporting member, such that the vehicle engine compartment assembly is a stable structure having a shape of " 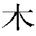 ". When the vehicle suffers collision at a high speed, the impact force is transferred through three load transfer paths to improve the energy absorption effect of the vehicle engine compartment assembly. In addition, since the whole structure of the present invention is stable, a distance between the upper longitudinal beam and the middle longitudinal beam can be designed relatively large, so that the upper longitudinal beam can be located more outside in a lateral direction of the vehicle. Thus, the vehicle engine compartment assembly of the present invention can confront collisions in smaller angles as compared with the prior art. When the vehicle suffers collisions with small overlap ratios or from different angles, at least one of the load transfer paths can absorb the energy adequately, and the structure formed by the upper longitudinal beam, the middle longitudinal beam and the front subframe can distribute the impact force to the other load transfer paths, to thereby improve the bending strength of the upper longitudinal beam, the middle longitudinal beam and the front subframe, such that the force load on the whole structure is more reasonable, and the axial crushing and the energy absorbing performance of the vehicle engine compartment assembly are improved, which is helpful to improve the stability of the passenger compartment and the safety of the vehicle.

### BRIEF DESCRIPTION OF THE DRAWINGS

FIG. 1 is a schematic, side view showing a traditional engine compartment.
FIG. 2 is a schematic, isometric view showing a vehicle engine compartment assembly according to an embodiment of the present invention.
FIG. 3 is a schematic, side view of the vehicle engine compartment assembly of FIG. 2.
FIG. 4 is a schematic, top view of the vehicle engine compartment assembly of FIG. 2.
FIG. 5 is a schematic, isometric view showing a connecting pillar of FIG. 2.
FIG. 6 is a schematic view showing load conditions of an upper longitudinal beam of the vehicle engine compartment assembly of FIG. 2.
FIG. 7 is a schematic view showing load transfer paths of the vehicle engine compartment assembly of FIG. 2 when subject to head-on collision.
FIG. 8 is a schematic view showing load transfer paths of the vehicle engine compartment assembly of FIG. 2 when subject to collisions with a small overlap ratio and from different angles.
FIG. 9a and FIG. 9b are schematic views showing the vehicle engine compartment assembly of FIG. 2 employed in vehicle models with different weights.

### DETAILED DESCRIPTION OF PREFERRED EMBODIMENTS

In order to make the purposes, characteristics, and advantages of the present application more apparently, embodiments of the present application will now be described in more detail with reference to the drawing figures.

Referring to FIG.2 to FIG. 4, the vehicle engine compartment assembly of the present invention includes two A-pillars 10, a front dash panel 20, two upper longitudinal beams 30, two middle longitudinal beams 40, a floor longitudinal beam 50, two connecting supporting members 60, a front subframe 70, two energy absorbing boxes 80 and a bumper beam 90.

There are two A-pillars 10 in front of a passenger compartment, the two A-pillars 10 are the main supporting structure of the passenger compartment.

The front dash panel 20 is provided between the two A-pillars 10, for separating an engine compartment from the passenger compartment.

The upper longitudinal beam 30 is welded to a top portion of the A-pillar 10, and extends forward from the top portion of the A-pillar 10 along a longitudinal direction. Particularly, the upper longitudinal beam 30 includes three portions. A first portion 31 of the upper longitudinal beam 30 is shaped like an inclined line from a side view of the vehicle. The first portion 31 extends forward and slightly downwards from the top portion of the A-pillar 10 along the longitudinal direction. A second portion 32 of the upper longitudinal beam 30 is arc-shaped from a side view of the vehicle. The second portion 32 is bent gradually downwards while extending forward from the front end of the first portion 31, such that the first portion 31 and a third portion 33 of the upper longitudinal beam 30 are connected smoothly, and the third portion 33 is lower than the first portion 31 in height. The third portion 33 of the upper longitudinal beam 30 is a horizontal line from a side view of the vehicle, and the third portion 33 extends forward horizontally from the front end of the second portion 32.

In a lateral direction of the vehicle, the middle longitudinal beam 40 is located at an inner side of the upper longitudinal beam 30, and extends along the longitudinal direction of the vehicle engine compartment assembly. The middle longitudinal beam 40 is shaped like a straight line from a side view of the vehicle, and has an inverted L-shaped cross section. A bottom surface of a top plate of the middle longitudinal beam 40 is located on the same plane as a bottom surface of the third portion 33 of the upper longitudinal beam 30.

The floor longitudinal beam 50 is arc-shaped from a side view of the vehicle, and is welded to the rear end of the middle longitudinal beam 40. The floor longitudinal beam 50 extends backwards and downwards from the rear end of the middle longitudinal beam 40 to a position under a floor of the passenger compartment, so that the middle longitudinal beam 40 and the floor of the passenger compartment are smoothly connected via the floor longitudinal beam 50. The floor longitudinal beam 50 is welded together with a bottom portion of the front dash panel 20 and the floor of the passenger compartment.

Along the longitudinal direction, the third portion 33 of the upper longitudinal beam 30 extends forwards beyond a front end of the middle longitudinal beam 40. In the lateral direction of the vehicle, the third portion 33 of the upper longitudinal beam 30 is spaced away by a distance from the middle longitudinal beam 40, so that the third portion 33 of the upper longitudinal beam 30 is suspended at an outer side of the middle longitudinal beam 40. A front end of the middle longitudinal beam 40 is threadedly connected to the energy absorbing box 80, and a front end of the energy absorbing box 80 is welded to the bumper beam 90. An outer wall of the front end of the middle longitudinal beam 40 is connected to the third portion 33 of the upper longitudinal beam 30 via the connecting supporting member 60. A bottom portion of the connecting supporting member 60 is connected to the front subframe 70.

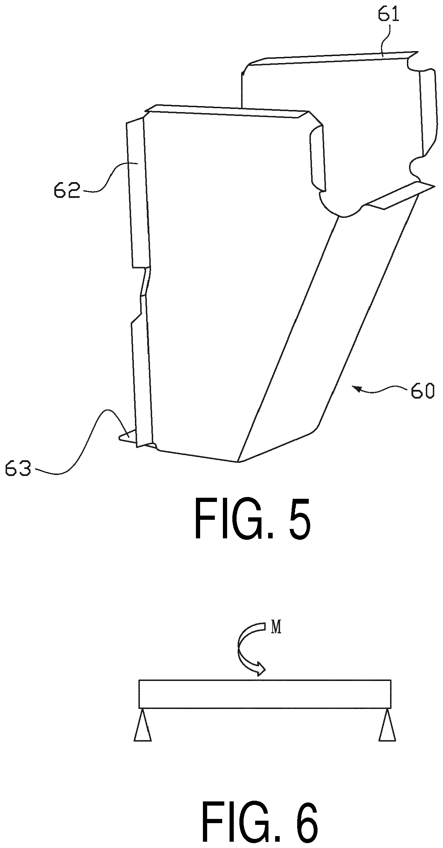

Referring to FIG. 5, the connecting supporting member 60 is shaped like a right-angled trapezoid from a side view thereof (or, from a front view of the vehicle). The connecting supporting member 60 includes a first connecting portion 61 connected to the upper longitudinal beam 30, a second connecting portion 62 connected to the middle longitudinal beam 40, and a third connecting portion 63 connected to the front subframe 70. The first connecting portion 61 is perpendicular to the second connecting portion 62, and the first connecting portion 61 is parallel to the third connecting portion 63. Particularly, the upper longitudinal beam 30 is located above the connecting supporting member 60, and a bottom surface of the third portion 33 is welded to the first connecting portion 61 of the connecting supporting member 60. The middle longitudinal beam 40 is also located above the connecting supporting member 60, and an outer surface of an inner side plate of the middle longitudinal beam 40 is welded to the second connecting portion 62 of the connecting supporting member 60. The front subframe 70 is located under the connecting supporting member 60, and a top surface of the front subframe 70 is threadedly connected to the third connecting portion 63 of the connecting supporting member 60.

Referring to FIG. 2, the front subframe 70 includes a front crossbar 71, two longitudinal bars 72, a rear crossbar 73, and two connecting brackets 74. The front crossbar 71 is located below the bumper beam 90, and the front crossbar 71 is disposed more closer to the passenger compartment in contrast to the bumper beam 90. Two ends of the front crossbar 71 are connected to the two longitudinal bars 72 respectively. Two ends of the rear crossbar 73 are connected to the two longitudinal bars 72 respectively. Each end of the front crossbar 71 is adjacent to one of the energy absorbing boxes 80. The connecting bracket 74 is located above a connecting position between the front crossbar 71 and the longitudinal bar 72, and the connecting bracket 74 is connected to the connecting supporting member 60 by bolts. The rear crossbar 73 transverses across rear portions of the longitudinal bars 72, and rear ends of the longitudinal bars 72 are welded to the floor longitudinal beams 50, with the welding points under the floor of the passenger compartment.

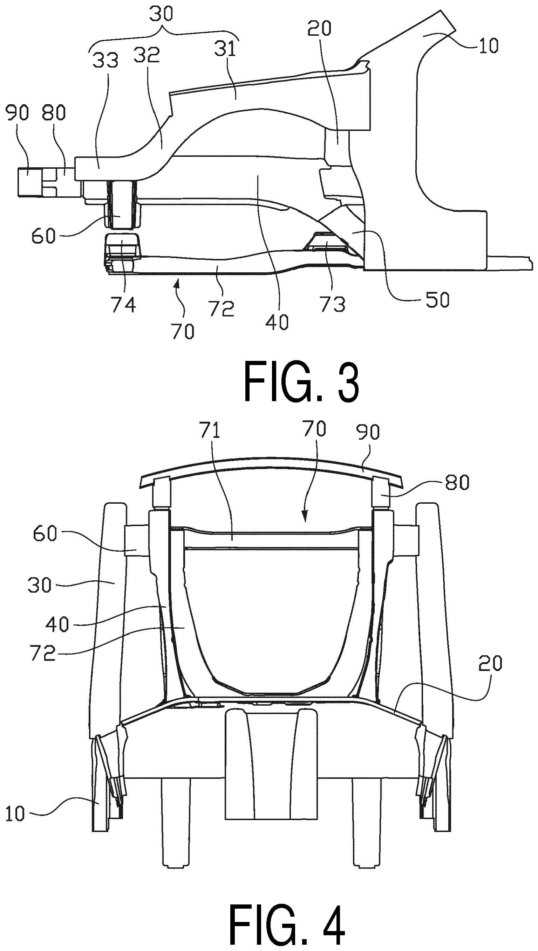

In the vehicle engine compartment assembly described above, seen from a side view of the vehicle engine compartment assembly, an end of the upper longitudinal beam 30 crosses with the connecting supporting member 60 and the middle longitudinal beam 40. A gap is defined between the other end of the upper longitudinal beam 30 and the middle longitudinal beam 40. An end of the longitudinal bar 72 is adjacent to the connecting supporting member 60 and the middle longitudinal beam 40. A gap is defined between the other end of the longitudinal bar 72 and the middle longitudinal beam 40. The other end of the longitudinal bar 72 and the other end of the upper longitudinal beam 30 are at opposites of the middle longitudinal beam 40. That is, the bumper beam 90, the energy absorbing box 80, the upper longitudinal beam 30, the middle longitudinal beam 40, the connecting supporting member 60 and the front subframe 70 cooperatively form a stable structure having a shape of " 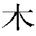 " from a side view of the vehicle engine compartment assembly, as shown in FIG. 3. The front subframe 70 comprises a front crossbar 71, two longitudinal bars 72 and a rear crossbar 73. Two ends of the front crossbar 71 are connected to the two longitudinal bars 72 respectively. Two ends of the rear crossbar 73 are connected to the two longitudinal bars 72 respectively. Each end of the front crossbar 71 is adjacent to one of the energy absorbing boxes 80. Seen from a top view of the vehicle engine compartment assembly, the upper longitudinal beams 30 are disposed at two opposite outer sides of the middle longitudinal beams 40 respectively along a lateral direction of the vehicle, two opposite sides of each connecting supporting member 60 are connected to one upper longitudinal beam 30 and one middle longitudinal beam 40, a gap is defined between one upper longitudinal beam 30 and one middle longitudinal beam 40. That is, a " 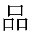 " shaped stable structure is formed by these components as viewed from a top view of the vehicle engine compartment assembly, as shown in FIG. 4.

The structure of the vehicle engine compartment assembly is described above in detail. The improvement of crushing strength of the vehicle engine compartment assembly is theoretically analyzed as follow.

For beams, during an axial crushing, an average load is calculated according to formula 1. ${P}_{m} = 9.5675 {\left(\frac{b + d}{2 t}\right)}^{\frac{1}{3}} {t}^{2} {σ}_{b}$ (1) wherein:
b stands for a length of a cross-section of a rectangular thin-wall tubular beam;
d stands for a width of the cross-section of the rectangular thin-wall tubular beam;
t stands for a thickness of the rectangular thin-wall tubular beam; and
*σ_{b}* stands for the ultimate tensile strength of the rectangular thin-wall tubular beam.

When the beam is bent to deform, an average load is about 40% of the load having an axial crushing only. Therefore, if the axial crushing strength of the beam is ensured, an energy absorbing performance of the beam will be greatly improved.

To ensure the axial crushing strength of the beam, a bending strength should be improved. A criterion of determining a bending failure for a beam is as follow. $Mf = FL \leq \left[M\right] = Wσy ,$ (2) wherein:
F stands for a force;
L stands for an arm of the force;
*σy* stands for a bending stress of the material;
W stands for section modulus in bending. $\begin{matrix}W = \frac{2 {L}_{z}}{b} \\ {L}_{z} = \frac{{bd}^{3}}{12} - \frac{\left(b-2t\right) {\left(d-2t\right)}^{3}}{12}\end{matrix}$ (3) wherein:
   b stands for a length of a cross-section of a rectangular thin-wall tubular beam;
   d stands for a width of the cross-section of the rectangular thin-wall tubular beam;
   t stands for a thickness of the rectangular thin-wall tubular beam.

As shown from Formula 2 and Formula 3, the bending strength of a cross-section depends on the length, the width and the thickness of the cross-section, and the cross-section is collapsed or not depends directly on the force acting on the cross-section and the arm of the force. Therefore, in order to improve the energy absorbing efficiency of the vehicle engine compartment assembly, the axial crushing strength and the bending strength of the vehicle engine compartment assembly should be improved, or a bending moment of the vehicle engine compartment assembly is offset by counterforce.

In the present invention, the connecting supporting member 60 is added between the upper longitudinal beam 30 and the middle longitudinal beam 40, to connect the upper longitudinal beam 30 with the middle longitudinal beam 40, whereby a force loading state of the upper longitudinal beam 30 is shown in FIG. 6. As shown in FIG. 6, the connecting supporting member 60 provides a supporting counterforce to the upper longitudinal beam 30, and decreases a bending moment M, thereby improving the bending strength of the upper longitudinal beam 30. For the same reason, the front subframe 70 is connected to the middle longitudinal beam 40 via the connecting supporting member 60, to improve the bending strength of the front subframe 70. Therefore, a stability of the front subframe 70 is ensured and the axial crushing strength in collision is improved, such that the energy absorbing capability and the energy absorbing efficiency of the vehicle engine compartment assembly are totally improved.

The operating theory of the vehicle engine compartment assembly in head-on collision is described as follow.

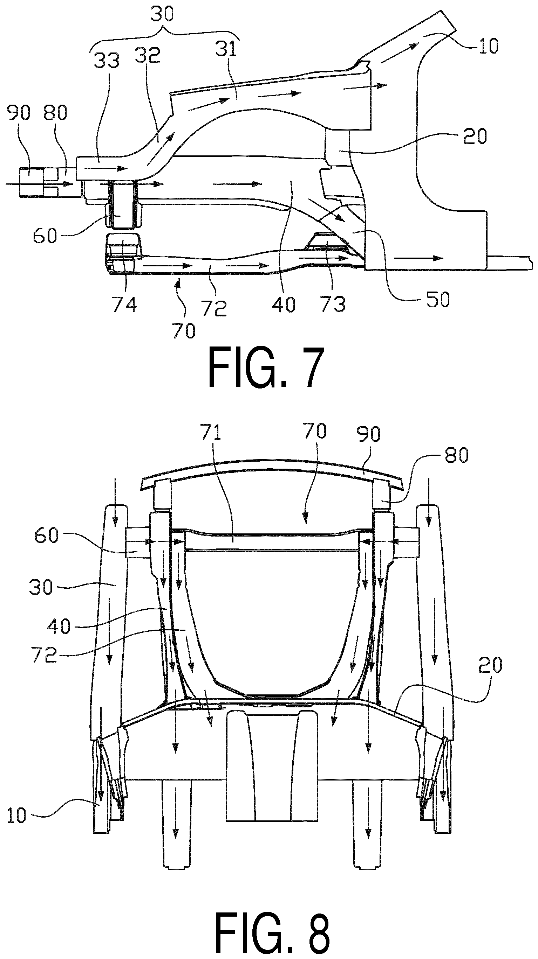

Referring to FIG. 7, when a head-on collision happens, an impact force acts on the bumper beam 90 firstly, the bumper beam 90 then transfers the impact force to the energy absorbing box 80 and the front portion of the middle longitudinal beam 40. Simultaneously, the impact force is transferred from the middle longitudinal beam 40 to the upper longitudinal beam 30 and the longitudinal bars 72 through the connecting supporting member 60. Therefore, during the head-on collision, the impact force is transferred to the beam structures at a rear side of the vehicle engine compartment assembly by three load transfer paths, such that the impact force is transferred by the frame structure as a whole, thereby avoiding a single beam structure to be unstable due to an exceeded force being applied thereon. Also, the impact energy is distributed uniformly on the three load transfer paths. That is, the impact force of head-on collision can be distributed uniformly along the three load transfer paths using the " 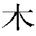 " shaped structure of the present invention. The " 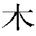 " shaped structure can keep stable, such that either one of the three load transfer paths is prevented from becoming unstable when bending to cause loss of force transferring capability and energy absorbing capability. That is, the " 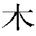 " shaped structure is stable, so that a single load transfer path suffers an axial crushing.

The operating theory of the vehicle engine compartment assembly when collided with small overlapping rates and in different angles is described as follow.

Referring to FIG. 8, when a collision happens with small different overlapping rates and from different angles, i.e., only a minority portion of the front of the vehicle is collided by an obstacle, the obstacle firstly collides on the upper longitudinal beam 30 located at outer side of the " 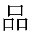 " shaped structure. The upper longitudinal beam 30 transfers the impact force to the middle longitudinal beam 40 and the longitudinal bars 72 through the connecting supporting member 60. Most of the impact force is applied on the upper longitudinal beam 30, and the rest of the impact force is applied on the middle longitudinal beam 40 and the longitudinal bars 72. Due to the connecting supporting member 60, the upper longitudinal beam 30, the middle longitudinal beam 40 and the front subframe 70 are connected together and cooperatively form a closed frame structure, to avoid forming an unstable cantilever structure. Therefore, when a collision happens with different overlapping rates and in different angles, the three load transfer paths are all capable of enduring the impact force, such that the vehicle engine compartment assembly can absorb most of the impact energy, to thereby ensure the passenger compartment stable and protect the passenger from being injured.

The operating theory of the vehicle engine compartment assembly when applied in different vehicle models is described as follow.

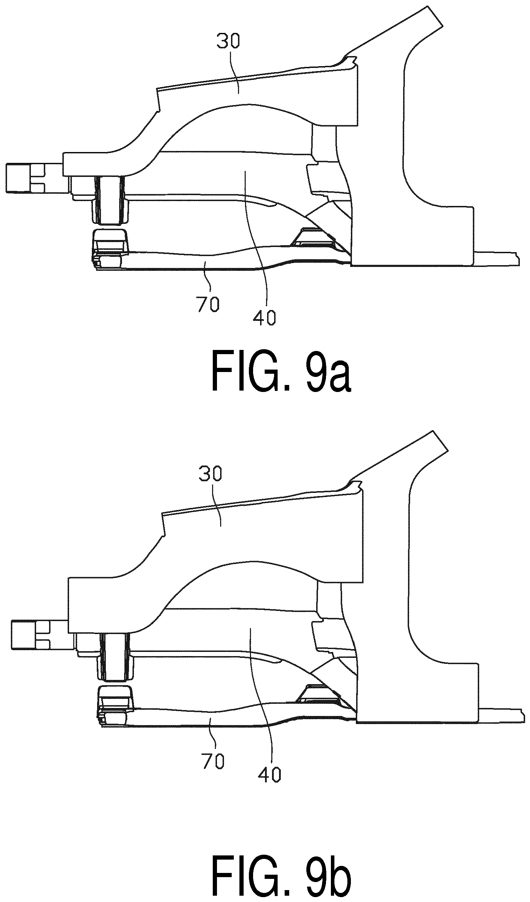

FIG. 9a is a schematic view showing the vehicle engine compartment assembly of the present invention applied in a vehicle model A, and FIG. 9b is a schematic view showing the vehicle engine compartment assembly of the present invention applied in a vehicle model B, it is assumed that the vehicle model B is heavier than the vehicle model A. When the vehicle engine compartment assembly is adapted to be applied in the vehicle model B from the vehicle model A, due to a requirement change of collision performance, it is concluded that the energy absorbing capability of the upper longitudinal beam 30 is required to be increased after conducting a theoretical calculation plus simulation. To increase the energy absorbing capability of the upper longitudinal beam 30, only a cross-section of the upper longitudinal beam 30 needs to be enlarged and other structures are general parts without being changed. As a result, the collision performance is changed, and a lateral distance of the upper longitudinal beams 30 of the left and the right sides can be kept unchanged along a lateral direction of the vehicle, such that more space is spared for the arrangement of a power assembly with improved flexibility, and it is achieved that different vehicle models can almost use the same structure.

As seen from the above description, the vehicle engine compartment assembly of the present invention has at least one of the following advantages.
1. In the vehicle engine compartment assembly of the present invention, the middle longitudinal beam 40 is added between the upper longitudinal beam 30 and the front subframe 70, and the upper longitudinal beam 30, the middle longitudinal beam 40 and the front subframe 70 are connected via the connecting supporting member 60, such that a structure of the vehicle engine compartment assembly is changed from a structure having a shape of " 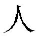 " in the prior art to a structure having a shape of " 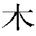 " in the present invention, to strengthen the frame structure of the vehicle engine compartment assembly. When the vehicle suffers collision at a high speed, the stable structure formed by the three load transfer paths can improve the energy absorption of the vehicle engine compartment assembly, so that the vehicle engine compartment assembly remains stable when a front of the vehicle is collided, to avoid any one of the load transfer paths from becoming unstable as a result of bending due to suffering different impact forces.
2. In the vehicle engine compartment assembly of the present invention, the " 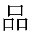 " shaped stable structure makes a distance between the upper longitudinal beam 30 and the middle longitudinal beam 40 to be relatively large, so that the upper longitudinal beam 30 can extend more outside in a lateral direction of the vehicle to get into contact with the obstacle more earlier. Thus, the vehicle engine compartment assembly of the present invention can confront collisions in smaller angles as compared with the prior art. When the vehicle suffers collisions with small overlap ratios or from different angles, at least one of the load transfer paths can absorb the energy adequately. The " 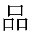 " shaped structure formed by the upper longitudinal beam 30, the middle longitudinal beam 40 and the front subframe 70 can distribute the impact force to the other load transfer paths, to thereby improve the bending strength of the upper longitudinal beam 30, the middle longitudinal beam 40 and the front subframe 70, such that the force load on the whole structure is more reasonable, and the axial crushing performance and the energy absorbing performance of the vehicle engine compartment assembly are improved, which is helpful toimprovethe stability of the passenger compartment and the safety of the vehicle.
3. When the vehicle engine compartment assembly collides with a high object such as a truck, the upper longitudinal beam 30 of the " 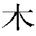 " shaped structure deforms to absorb energy adequately, and the whole structure is capable of transferring the impact force to the other load transfer paths, to thereby ensure its integrity of the passenger compartment.
4. When the " 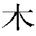 " shaped structure suffers a collision, the three load transfer paths can realize a stable energy absorbing effect. Thus, the proportion of energy absorption can be allocated reasonably between the three load transfer paths, and the cross-section areas of the three load transfer paths are accordingly designed according to the proportion of energy absorption, so that the vehicle engine compartment can be designed more flexibly when the layout requirement of the vehicle engine compartment is meet.
5. In the vehicle engine compartment assembly of the present invention, when the middle longitudinal beam 40 remains unchanged, the crosssection of the upper longitudinal beam 30 or the front subframe 70 can be enlarged to improve energy absorption of the upper longitudinal beam 30 or the front subframe 70, to meet the collision requirements of vehicle models with different weight and realize the purpose of more structural parts being universal in different vehicle models.
6. The crashing box 80 protruded out from the front of the vehicle engine compartment assembly of the present invention can absorb the impact energy adequately when a low speed collision happens, to protect the middle longitudinal beam 40, the upper longitudinal beam 30 and the front subframe 70 from being damaged. After the crashing box 80 is damaged, it can be fixed conveniently by detaching and mounting bolts, such that the damage in low speed collisions can be repaired easily.
7. In the vehicle engine compartment assembly of the present invention, the front portion of the upper longitudinal beam 30 extends forward beyond the middle longitudinal beam 40, so that the upper longitudinal beam 30 comes into contact with the obstacle earlier to absorb energy when a collision happens.
8. The frame structure formed by the vehicle engine compartment assembly of the present invention is " 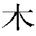 " shaped as viewed from a side view and " 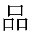 " shaped as viewed from a top view, which is helpful to improve the whole rigidity of the vehicle engine compartment assembly. The NVH (Noise, Vibration, and Harshness) performance and the lightweight level of the vehicle engine compartment assembly are improved.

In this description, the term "include", or any of its variants, is intended to cover non-exclusive inclusion, except for the elements listed, also including other elements that are not explicitly listed.

In this description, the orientation words "front", "back", "up", "down", "left", "right", etc., are defined by the position of the parts in the drawing for the purpose of clarity and convenience. It is understood that, the orientation words should not be deemed as limitations to the scope of the present disclosure.

In the case of no conflict, the above examples and the features in the examples can be combined with each other.

The above are embodiments of the present disclosure only, and should not be deemed as limitations to the scope of the present disclosure. It should be noted that variations and improvements will become apparent to those skilled in the art to which the present disclosure pertains. Therefore, the scope of the present disclosure is defined by the appended claims.

### Industrial Applicability

1. In the vehicle engine compartment assembly of the present invention, the middle longitudinal beam 40 is added between the upper longitudinal beam 30 and the front subframe 70, and the upper longitudinal beam 30, the middle longitudinal beam 40 and the front subframe 70 are connected via the connecting supporting member 60, such that a structure of the vehicle engine compartment assembly is changed from a structure having a shape of " 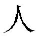 " in the prior art to a structure having a shape of " 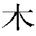 " in the present invention, to strengthen the frame structure of the vehicle engine compartment assembly. When the vehicle suffers collision at a high speed, the stable structure formed by the three load transfer paths can improve the energy absorption of the vehicle engine compartment assembly, so that the vehicle engine compartment assembly remains stable when a front of the vehicle is collided, to avoid any one of the load transfer paths from becoming unstable as a result of bending due to suffering different impact forces.
2. In the vehicle engine compartment assembly of the present invention, the " 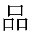 " shaped stable structure makes a distance between the upper longitudinal beam 30 and the middle longitudinal beam 40 to be relatively large, so that the upper longitudinal beam 30 can be located more outside in a lateral direction of the vehicle to get into contact with the obstacle more earlier. Thus, the vehicle engine compartment assembly of the present invention can confront collisions in smaller angles as compared with the prior art. When the vehicle suffers collisions with small overlap ratios or from different angles, at least one of the load transfer paths can absorb the energy adequately. The " 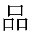 " shaped structure formed by the upper longitudinal beam 30, the middle longitudinal beam 40 and the front subframe 70 can distribute the impact force to the other load transfer paths, to thereby improve the bending strength of the upper longitudinal beam 30, the middle longitudinal beam 40 and the front subframe 70, such that the force load on the whole structure is more reasonable, and the axial crushing performance and the energy absorbing performance of the vehicle engine compartment assembly are improved, which is helpful to improve the stability of the passenger compartment and the safety of the vehicle.
3. When the vehicle engine compartment assembly collides with a high object such as a truck, the upper longitudinal beam 30 of the " 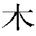 " shaped structure deforms to absorb energy adequately, and the whole structure is capable of transferring the impact force to the other load transfer paths, to thereby ensure its integrity of the passenger compartment.
4. When the " 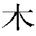 " shaped structure suffers a collision, the three load transfer paths can realize a stable energy absorbing effect. Thus, the proportion of energy absorption can be allocated reasonably between the three load transfer paths, and the cross-section areas of the three load transfer paths are accordingly designed according to the proportion of energy absorption, so that the vehicle engine compartment can be designed more flexibly when the layout requirement of the vehicle engine compartment is meet.
5. In the vehicle engine compartment assembly of the present invention, when the middle longitudinal beam 40 remains unchanged, the cross section of the upper longitudinal beam 30 or the front subframe 70 can be enlarged to improve energy absorption of the upper longitudinal beam 30 or the front subframe 70, to meet the collision requirements of vehicle models with different weight and realize the purpose of more structural parts being universal in different vehicle models.
6. The crashing box 80 protruded out from the front of the vehicle engine compartment assembly of the present invention can absorb the impact energy adequately when a low speed collision happens, to protect the middle longitudinal beam 40, the upper longitudinal beam 30 and the front subframe 70 from being damaged. After the crashing box 80 is damaged, it can be fixed conveniently by detaching and mounting bolts, such that the damage in low speed collisions can be repaired easily.
7. In the vehicle engine compartment assembly of the present invention, the front portion of the upper longitudinal beam 30 extends forward beyond the middle longitudinal beam 40, so that the upper longitudinal beam 30 comes into contact with the obstacle earlier to absorb energy when a collision happens.
8. The frame structure formed by the vehicle engine compartment assembly of the present invention is " 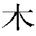 " shaped as viewed from a side view and " 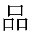 " shaped as viewed from a top view, which is helpful to improve the whole rigidity of the vehicle engine compartment assembly. The NVH (Noise, Vibration, and Harshness) performance and the lightweight level of the vehicle engine compartment assembly are improved.

## Claims

1. A vehicle engine compartment assembly, comprising two upper longitudinal beams (30) and a front subframe(70) disposed under the upper longitudinal beams (30), wherein the vehicle engine compartment assembly further comprises two middle longitudinal beams (40) and two connecting supporting members (60), each middle longitudinal beam (40) is disposed between one of the upper longitudinal beams (30) and the front subframe (70), and each connecting supporting member (60) is connected to one of the middle longitudinal beams (40), one of the upper longitudinal beams (30) and the front subframe (70); the vehicle engine compartment assembly further comprises two energy absorbing boxes (80) and a bumper beam (90), the energy absorbing boxes (80) are disposed in the front of the upper longitudinal beam (30) and the bumper beam (90) is disposed in the front of the energy absorbing boxes (80), it is **characterized in that** a front portion of the upper longitudinal beams (30) protrude out beyond the middle longitudinal beams (40) along a longitudinal direction of the vehicle, the front portion of the upper longitudinal beams (30) protruding out the middle longitudinal beams (40) and an energy absorbing boxes (80) of the vehicle are located side by side, seen from a side view of the vehicle engine compartment assembly, an end of the upper longitudinal beam (30) crosses with the connecting supporting member (60) and the middle longitudinal beam (40), a gap is defined between the other end of the upper longitudinal beam (30) and the middle longitudinal beam (40), an end of the longitudinal bar (72) is adjacent to the connecting supporting member (60) and the middle longitudinal beam (40), a gap is defined between the other end of the longitudinal bar (72) and the middle longitudinal beam (40), the other end of the longitudinal bar (72) and the other end of the upper longitudinal beam (30) are at opposites of the middle longitudinal beam (40).

2. The vehicle engine compartment assembly according to claim **1,** wherein the front subframe (70) comprises a front crossbar (71), two longitudinal bars (72) and a rear crossbar (73), two ends of the front crossbar (71) are connected to the two longitudinal bars (72) respectively, two ends of the rear crossbar (73) are connected to the two longitudinal bars (72) respectively, each end of the front crossbar (71) is adjacent to one of the energy absorbing boxes (80);
seen from a top view of the vehicle engine compartment assembly, the upper longitudinal beams (30) are disposed at two opposite outer sides of the middle longitudinal beams (40) respectively along a lateral direction of the vehicle, two opposite sides of each connecting supporting member (60) are connected to one upper longitudinal beam (30) and one middle longitudinal beam (40), a gap is defined between one upper longitudinal beam (30) and one middle longitudinal beam (40).

3. The vehicle engine compartment assembly according to claim **1,** wherein the upper longitudinal beam(30) comprises a first portion(31), a second portion (32) and a third portion (33), the first portion (31) is connected to an A-pillar (10) of the vehicle, the third portion (33) is connected to an energy absorbing box(80) of the vehicle, a height of the third portion (33) is lower than a height of the first portion (31), the second portion (32) is connected between the first portion (31) and the third portion (33), and the connecting supporting member (60) is connected to the third portion (33) of the upper longitudinal beam (30).

4. The vehicle engine compartment assembly according to claim 3, wherein the first portion (31) of the upper longitudinal beam(30) is shaped like an inclined line from a side view of the vehicle, the second portion (32) of the upper longitudinal beam(30) is arc-shaped from a side view of the vehicle, and the third portion (33) of the upper longitudinal beam(30) is a horizontal line from a side view of the vehicle.

5. The vehicle engine compartment assembly according to claim 1, wherein the connecting supporting member (60) comprises a first connecting portion (61) connected to the upper longitudinal beam (30), a second connecting portion (62) connected to the middle longitudinal beam(40),and a third connecting portion (63) connected to the front subframe (70), the first connecting portion (61) is perpendicular to the second connecting portion (62), and the first connecting portion (61) is parallel to the third connecting portion (63).

6. The vehicle engine compartment assembly according to claim 1, wherein the front subframe (70) further comprises a connecting bracket (74), the connecting bracket (74) is located above a connecting position between the front crossbar (71) and the longitudinal bar (72), and the front subframe (70) is threadedly connected to the connecting supporting member (60) via the connecting bracket (74).

## Patentansprüche

1. Fahrzeugmotorraum-Anordnung, umfassend zwei obere Längsträger (30) und einen vorderen Hilfsrahmen (70), der unter den oberen Längsträgern (30) angeordnet ist, wobei die Fahrzeugmotorraum-Anordnung ferner zwei mittlere Längsträger (40) und zwei verbindende Tragelemente (60) umfasst, wobei jeder mittlere Längsträger (40) zwischen einem der oberen Längsträger (30) und dem vorderen Hilfsrahmen (70) angeordnet ist, und jedes verbindende Tragelement (60) mit einem der mittleren Längsträger (40), einem der oberen Längsträger (30) und dem vorderen Hilfsrahmen (70) verbunden ist; wobei die Fahrzeugmotorraum-Anordnung ferner zwei energieabsorbierende Kästen (80) und einen Stoßfängerträger (90) umfasst, wobei die energieabsorbierenden Kästen (80) vor dem oberen Längsträger (30) angeordnet sind und der Stoßfängerträger (90) vor den energieabsorbierenden Kästen (80) angeordnet ist, **dadurch gekennzeichnet, dass** ein vorderer Abschnitt der oberen Längsträger (30) über die mittleren Längsträger (40) entlang einer Längsrichtung des Fahrzeugs herausragt, wobei der vordere Abschnitt der oberen Längsträger (30), der aus den mittleren Längsträgern (40) herausragt, und ein energieabsorbierender Kasten (80) des Fahrzeugs sich in einer Seitenansicht der Fahrzeugmotorraum-Anordnung gesehen nebeneinander befinden, ein Ende des oberen Längsträgers (30) sich mit dem verbindenden Tragelement (60) und dem mittleren Längsträger (40) kreuzt, ein Spalt zwischen dem anderen Ende des oberen Längsträgers (30) und dem mittleren Längsträger (40) definiert ist, ein Ende des Längsholms (72) an das verbindende Tragelement (60) und den mittleren Längsträger (40) angrenzt, ein Spalt zwischen dem anderen Ende des Längsholms (72) und dem mittleren Längsträger (40) definiert ist, das andere Ende des Längsholms (72) und das andere Ende des oberen Längsträgers (30) an gegenüberliegenden Seiten des mittleren Längsträgers (40) sind.

2. Fahrzeugmotorraum-Anordnung gemäß Anspruch 1, wobei der vordere Hilfsrahmen (70) einen vorderen Querholm (71), zwei Längsholme (72) und einen hinteren Querholm (73) aufweist, zwei Enden des vorderen Querholms (71) jeweils mit den zwei Längsholmen (72) verbunden sind, zwei Enden des hinteren Querholms (73) jeweils mit den zwei Längsholmen (72) verbunden sind, jedes Ende des vorderen Querholms (71) an einen der energieabsorbierenden Kästen (80) angrenzt;
in einer Draufsicht auf die Fahrzeugmotorraum-Anordnung gesehen, sind die oberen Längsträger (30) an zwei gegenüberliegenden Außenseiten der mittleren Längsträger (40) jeweils entlang einer seitlichen Richtung des Fahrzeugs angeordnet, zwei gegenüberliegende Seiten jedes verbindenden Tragelements (60) sind mit einem oberen Längsträger (30) und einem mittleren Längsträger (40) verbunden, ein Spalt ist zwischen einem oberen Längsträger (30) und einem mittleren Längsträger (40) definiert.

3. Fahrzeug-Motorraumanordnung gemäß Anspruch 1, wobei der obere Längsträger (30) einen ersten Abschnitt (31), einen zweiten Abschnitt (32) und einen dritten Abschnitt (33) aufweist, der erste Abschnitt (31) mit einer A-Säule (10) des Fahrzeugs verbunden ist, der dritte Abschnitt (33) mit einem energieabsorbierenden Kasten (80) des Fahrzeugs verbunden ist, eine Höhe des dritten Abschnitts (33) niedriger ist als eine Höhe des ersten Abschnitts (31), der zweite Abschnitt (32) zwischen dem ersten Abschnitt (31) und dem dritten Abschnitt (33) verbunden ist, und das verbindende Tragelement (60) mit dem dritten Abschnitt (33) des oberen Längsträgers (30) verbunden ist.

4. Fahrzeugmotorraum-Anordnung gemäß Anspruch 3, wobei der erste Abschnitt (31) des oberen Längsträgers (30) aus einer Seitenansicht des Fahrzeugs wie eine geneigte Linie geformt ist, der zweite Abschnitt (32) des oberen Längsträgers (30) aus einer Seitenansicht des Fahrzeugs bogenförmig ist und der dritte Abschnitt (33) des oberen Längsträgers (30) aus einer Seitenansicht des Fahrzeugs eine horizontale Linie ist.

5. Fahrzeugmotorraum-Anordnung gemäß Anspruch 1, wobei das verbindende Tragelement (60) einen ersten Verbindungsabschnitt (61), der mit dem oberen Längsträger (30) verbunden ist, einen zweiten Verbindungsabschnitt (62), der mit dem mittleren Längsträger (40) verbunden ist, und einen dritten Verbindungsabschnitt (63), der mit dem vorderen Hilfsrahmen (70) verbunden ist, umfasst, wobei der erste Verbindungsabschnitt (61) senkrecht zu dem zweiten Verbindungsabschnitt (62) ist und der erste Verbindungsabschnitt (61) parallel zu dem dritten Verbindungsabschnitt (63) ist.

6. Fahrzeugmotorraum-Anordnung gemäß Anspruch 1, wobei der vordere Hilfsrahmen (70) ferner einen Verbindungsbügel (74) aufweist, sich der Verbindungsbügel (74) oberhalb einer Verbindungsposition zwischen dem vorderen Querholm (71) und dem Längsholm (72) befindet, und der vordere Hilfsrahmen (70) über den Verbindungsbügel (74) mit dem verbindenden Tragelement (60) verschraubt ist.

## Revendications

1. Un ensemble de compartiment moteur de véhicule, comprenant deux poutres longitudinales supérieures (30) et un sous-châssis avant (70) disposé sous les poutres longitudinales supérieures (30), dans lequel l'ensemble de compartiment moteur de véhicule comprend en outre deux poutres longitudinales centrales (40) et deux éléments de support de connexion (60), chaque poutre longitudinale centrale (40) est disposée entre une des poutres longitudinales supérieures (30) et le sous-châssis avant (70), et chaque élément de support de connexion (60) est connecté à une des poutres longitudinales centrales (40), à une des poutres longitudinales supérieures (30) et au sous-châssis avant (70) ; l'ensemble de compartiment moteur de véhicule comprend en outre deux boîtes d'absorption d'énergie (80) et une poutre de pare-chocs (90), les boîtes d'absorption d'énergie (80) sont disposées à l'avant de la poutre longitudinale supérieure (30) et la poutre de pare-chocs (90) est disposée à l'avant des boîtes d'absorption d'énergie (80), il est **caractérisé en ce qu'**une partie avant des poutres longitudinales supérieures (30) fait saillie au-delà des poutres longitudinales centrales (40) le long d'une direction longitudinale du véhicule, la partie avant des poutres longitudinales supérieures (30) faisant saillie hors des poutres longitudinales centrales (40) et une boîte d'absorption d'énergie (80) du véhicule sont situées côte à côte, vu à partir d'une vue latérale de l'ensemble de compartiment moteur de véhicule, une extrémité de la poutre longitudinale supérieure (30) se croise avec l'élément de support de connexion (60) et la poutre longitudinale centrale (40), un espace est défini entre l'autre extrémité de la poutre longitudinale supérieure (30) et la poutre longitudinale centrale (40), une extrémité de la barre longitudinale (72) est adjacente à l'élément de support de connexion (60) et à la poutre longitudinale centrale (40), un espace est défini entre l'autre extrémité de la barre longitudinale (72) et la poutre longitudinale centrale (40), l'autre extrémité de la barre longitudinale (72) et l'autre extrémité de la poutre longitudinale supérieure (30) sont à l'opposé de la poutre longitudinale centrale (40).

2. L'ensemble de compartiment moteur de véhicule selon la revendication 1, dans lequel le sous-châssis avant (70) comprend une barre transversale avant (71), deux barres longitudinales (72) et une barre transversale arrière (73), deux extrémités de la barre transversale avant (71) sont connectées aux deux barres longitudinales (72) respectivement, deux extrémités de la barre transversale arrière (73) sont connectées aux deux barres longitudinales (72) respectivement, chaque extrémité de la barre transversale avant (71) est adjacente à une des boîtes d'absorption d'énergie (80) ;
vu à partir d'une vue de dessus de l'ensemble de compartiment moteur de véhicule, les poutres longitudinales supérieures (30) sont disposées sur deux côtés extérieurs opposés des poutres longitudinales centrales (40) respectivement le long d'une direction latérale du véhicule, deux côtés opposés de chaque élément de support de connexion (60) sont connectés à une poutre longitudinale supérieure (30) et à une poutre longitudinale centrale (40), un espace est défini entre une poutre longitudinale supérieure (30) et une poutre longitudinale centrale (40).

3. L'ensemble de compartiment moteur de véhicule selon la revendication 1, dans lequel la poutre longitudinale supérieure (30) comprend une première partie (31), une deuxième partie (32) et une troisième partie (33), la première partie (31) est connectée à un montant A (10) du véhicule, la troisième partie (33) est connectée à une boîte d'absorption d'énergie (80) du véhicule, une hauteur de la troisième partie (33) est inférieure à une hauteur de la première partie (31), la deuxième partie (32) est connectée entre la première partie (31) et la troisième partie (33), et l'élément de support de connexion (60) est connecté à la troisième partie (33) de la poutre longitudinale supérieure (30).

4. L'ensemble de compartiment moteur de véhicule selon la revendication 3, dans lequel la première partie (31) de la poutre longitudinale supérieure (30) a la forme d'une ligne inclinée à partir d'une vue latérale du véhicule, la deuxième partie (32) de la poutre longitudinale supérieure (30) est en forme d'arc à partir d'une vue latérale du véhicule, et la troisième partie (33) de la poutre longitudinale supérieure (30) est une ligne horizontale à partir d'une vue latérale du véhicule.

5. L'ensemble de compartiment moteur de véhicule selon la revendication 1, dans lequel l'élément de support de connexion (60) comprend une première partie de connexion (61) connectée à la poutre longitudinale supérieure (30), une deuxième partie de connexion (62) connectée à la poutre longitudinale centrale (40), et une troisième partie de connexion (63) connectée au sous-châssis avant (70), la première partie de connexion (61) est perpendiculaire à la deuxième partie de connexion (62), et la première partie de connexion (61) est parallèle à la troisième partie de connexion (63).

6. L'ensemble de compartiment moteur de véhicule selon la revendication 1, dans lequel le sous-châssis avant (70) comprend en outre un support de connexion (74), le support de connexion (74) est situé au-dessus d'une position de connexion entre la barre transversale avant (71) et la barre longitudinale (72), et le sous-châssis avant (70) est connecté par filetage à l'élément de support de connexion (60) via le support de connexion (74).
